# EUROPÄISCHE PATENTSCHRIFT

(11) **EP 3 783 252 B1**
(45) Veröffentlichungstag und Bekanntmachung des Hinweises auf die Patenterteilung: **21.07.2021**
(21) Anmeldenummer: 19192627.8
(22) Anmeldetag: 20.08.2019
(51) Int. Cl.: F16P 3/08, B26D 7/22

(54) **BROTSCHNEIDEMASCHINE MIT MESSERSCHUTZ**
BREAD CUTTING MACHINE WITH BLADE PROTECTION
MACHINE À COUPER LE PAIN COMPRENANT UNE PROTECTION DU COUTEAU

(43) Veröffentlichungstag der Anmeldung: 24.02.2021
(73) Patentinhaber: Bizerba SE & Co. KG, 72336 Balingen (DE)
(72) Erfinder: Korell, Leo, 72336 Balingen (DE)
(74) Vertreter: Kohler Schmid Möbus Patentanwälte

(56) Entgegenhaltungen:
- EP-A2- 0 044 925
- EP-A2- 2 667 080
- DE-A1- 3 706 485
- DE-A1-102011 010 935
- DE-A1-102012 002 489

## Beschreibung

Die Erfindung betrifft eine Brotschneidemaschine zum Abschneiden von Scheiben aus Schneidgut, insbesondere Brot, mit einer Schneideeinrichtung, die ein Kreismesser umfasst, das in einer Warteposition in einem Maschinengehäuse gelagert und durch einen vom Maschinengehäuse umschlossenen Motor angetrieben ist, wobei das Kreismesser an einem Messerarm rotierbar befestigt ist, wobei am oder im Maschinengehäuse ein Schneideraum für das Schneidgut ausgebildet ist, wobei der Schneideraum einen Führungsspalt aufweist, wobei durch Bewegen des Führungsarms das Kreismesser in dem Führungsspalt durch einen Ausfahrspalt des Maschinengehäuses aus der Warteposition in den Schneideraum hinein verfahrbar ist, wobei am Maschinengehäuse eine Haube zum Abdecken des rotierenden Kreismessers im Betrieb angeordnet ist, wobei die Haube einen Verriegelungsmechanismus aufweist, durch den die Haube stets verriegelt ist, wenn sich das Kreismesser im Schneideraum und/oder Betriebszustand befindet, wobei der Führungsspalt durch eine senkrecht zur Bewegungsrichtung des Kreismessers verschiebbare Schwinge abdeckbar ist, wenn sich das Kreismesser in der Warteposition befindet, wobei die Schwinge gleichzeitig mit dem Ausfahren des Kreismessers aus der Warteposition vom Führungsspalt weg verschiebbar ist, wodurch der Führungsspalt geöffnet wird.

### Hintergrund der Erfindung

Derartige Brotschneidemaschinen sind aus dem Stand der Technik bekannt.
Die EP 2 667 080 A2 beschreibt eine Schneidemaschine mit einem motorisch angetriebenen rotierenden Messer. Das Messer wird von einer Haube abgedeckt, die während des Schneidens verriegelt ist. Die Entriegelung erfolgt durch eine Sicherheitsvorrichtung mit einer Signalverarbeitung, sobald die Drehzahl des Messers unter eine Grenzdrehzahl gefallen ist. Wenn das Messer nicht in Betrieb ist, befindet es sich im Maschinengehäuse der Schneidemaschine. Zum Schneiden wird das Messer aus dem Maschinengehäuse in Richtung eines Schneidebereichs verfahren.
Eine weitere aus dem Stand der Technik bekannte Scheibenschneid-und Teilmaschine ist aus der Patentdruckschrift DE3706485 A1 bekannt. Diese Scheibenschneid-und Teilmaschine umfasst u.A. einen Rundmesser und eine Messerschutzhaube, die einen Benutzer gegen Verletzungsgefahr schützt. Das Rundmesser verbleibt nach dem letzten Schnitt unter der Messerschutzhaube. Die Messerschutzhaube ist unbeweglich ausgeführt.

Die aus dem Stand der Technik bekannten Brotschneidemaschinen weisen keinen konstruktiv einfachen Schutz eines Benutzers gegen ein Hineingreifen durch den Ausfahrspalt in das Maschinengehäuse auf, wobei die Gefahr einer Verletzung an dem Kreismesser besteht.

### Aufgabe der Erfindung

Demgegenüber liegt der vorliegenden Erfindung die -im Detail betrachtet relativ anspruchsvolle- Aufgabe zugrunde, eine Brotschneidemaschine mit einem konstruktiv einfachen und raumsparenden Schutz eines Benutzers vor dem in der Warteposition im Maschinengehäuse befindlichen Kreismesser bereitzustellen.

### Kurze Beschreibung der Erfindung

Diese Aufgabe wird durch die vorliegende Erfindung auf ebenso überraschend einfache wie wirkungsvolle Weise dadurch gelöst, dass auf einer Schneidgut-seitigen Oberfläche der Schwinge eine Abdeckungsplatte starr befestigt ist, die im Wesentlichen vertikal von der Schwinge weg ragt und den Ausfahrspalt immer dann abdeckt, wenn sich das Kreismesser in der Warteposition befindet, wobei die Abdeckungsplatte durch eine Zwangsführung gleichzeitig mit der Bewegung der Schwinge von dem Ausfahrspalt weg bewegbar ist, wodurch der Ausfahrspalt geöffnet wird.

Damit wird die -bisher stets vorhandene- Verletzungsgefahr bei einem Hineingreifen durch den Ausfahrspalt in das Maschinengehäuse, wenn sich das Kreismesser in der Warteposition befindet, nunmehr vollständig vermieden. Wenn das Kreismesser in der Warteposition im Maschinengehäuse gelagert ist, deckt die Abdeckungsplatte den Ausfahrspalt ab, hinter dem sich das Kreismesser befindet (vom Schneideraum aus gesehen). Dadurch kann der Benutzer der Brotschneidemaschine nicht in den Schlitz greifen und sich versehentlich an dem Kreismesser verletzen. Die Abdeckungsplatte erhöht somit den Schutz für den Benutzer der Brotschneidemaschine. Der Schutz ist zum Ausfahren des Kreismessers leicht entfernbar. Denn die starre Verbindung der Abdeckungsplatte mit der Schwinge und die gleichzeitige Bewegung der Abdeckungsplatte mit der Schwinge ermöglichen auf einfache und raumsparende Weise ein gleichzeitiges Öffnen des Ausfahrspaltes und des Führungsspaltes, wenn das Kreismesser in den Schneideraum bewegt wird.

### Bevorzugte Ausführungsformen und Weiterbildungen der Erfindung

Eine Klasse von vorteilhaften Ausführungsformen der erfindungsgemäßen Brotschneidemaschine ist dadurch gekennzeichnet, dass die Abdeckungsplatte gemeinsam mit der Schwinge, insbesondere linear, verschiebbar ist, oder dass ein Schwenkmechanismus vorhanden ist, der die Abdeckungsplatte auf schwenkt, wenn die Schwinge verschoben wird. Die Abdeckungsplatte kann insbesondere an dem Maschinengehäuse entlang verschoben werden. Wenn die Abdeckungsplatte innerhalb des Maschinengehäuses verschoben wird, ist sie auch während des Verschiebens vor äußeren Einwirkungen gut geschützt. Eine aufschwenkende Abdeckungsplatte deckt den Ausfahrspalt, auch während das Kreismesser aus dem Ausfahrspalt herausfährt, weiterhin auf einer oder auf beiden Seite des Kreismessers ab und entfaltet eine schützende Wirkung. Die erfindungsgemäße Brotschneidemaschine kann auch Sicherheitsnormen (vgl. DIN EN ISO 13857 oder DIN EN 13954:2005 + A1:2010) erfüllen, die für den Umgang mit Brotschneidemaschinen durch ungeschultes Personal, beispielsweise im Bereich der Selbstbedienung, gelten. Die Abdeckungsplatte kann im montierten Zustand am oberen Rand in einer Schiene geführt sein.

Besonders bevorzugt sind Ausführungsformen der erfindungsgemäßen Brotschneidemaschine, die sich dadurch auszeichnen, dass der Verriegelungsmechanismus so ausgestaltet ist, dass die Haube stets verriegelt ist, wenn sich das Kreismesser im Schneideraum befindet. Die Haube schützt den Benutzer der Brotschneidemaschine vor dem freistehenden Kreismesser, insbesondere wenn das Kreismesser in Betrieb ist.

Der Verriegelungsmechanismus kann so ausgestaltet ist, dass das Kreismesser nur dann in den Schneideraum verfahrbar ist, wenn die Haube verriegelt ist. Hierdurch ist zusätzlich sichergestellt, dass das Kreismesser nicht freisteht, wenn es der Benutzer ungeschützt berühren kann.

Besonders bevorzugt sind auch Ausführungsformen der Erfindung, bei denen im montierten Zustand der Abdeckungsplatte eine Zapfenverbindung zur Schwinge vorhanden ist. Alternativ zu Zapfen sind auch Schrauben oder Dübel verwendbar. Eine solche Formschlussverbindung stellt eine zerstörungsfrei lösbare und raumsparende Verbindung dar.

Weitere, ganz besonders vorteilhafte Ausführungsformen der Erfindung sind dadurch gekennzeichnet, dass die Abdeckungsplatte und die Schwinge eine Klebstoffverbindung und/oder eine Schweißverbindung aufweisen. Dadurch lässt sich eine stabile Kraftschlussverbindung herstellen.

Besonders bevorzugt sind auch Ausführungsformen der Erfindung, bei denen die Schwinge eine Ausnehmung, insbesondere eine Nut, aufweist, in die die Abdeckungsplatte im montierten Zustand eingeschoben ist. Durch den Formschluss von Schwinge und Abdeckungsplatte ist die Verbindung gegen Verschiebekräfte entlang der Oberfläche der Schwinge, die auf die Abdeckungsplatte einwirken, besser stabilisiert.

Vorteilhaft sind auch Ausführungsformen der erfindungsgemäßen Brotschneidemaschine, bei denen die Abdeckungsplatte einen Fuß zur stabilen Abstützung der Abdeckungsplatte auf der Schwinge aufweist, der vorzugsweise auch Öffnungen zur Aufnahme von Schrauben und/oder Stiften enthält. Durch die Öffnungen lassen sich die Verbindungen durch Schrauben und/oder Stifte besonders leicht herstellen. Der Fuß bewirkt eine Abstützung der Abdeckplatte auf der Schwinge.

Bei alternativen oder ergänzenden Ausführungsformen der erfindungsgemäßen Brotschneidemaschine sind die Abdeckungsplatte und die Schwinge durch Stifte und/oder Schrauben, vorzugsweise durch einen oder mehrere Winkelverbinder, miteinander verbunden. Die Winkelverbinder bewirken eine rasch montierbare und zuverlässige Lagesicherung der Abdeckungsplatte.

Weitere vorteilhafte Ausführungsformen der Erfindung zeichnen sich dadurch aus, dass die Abdeckungsplatte mit der Schwinge einteilig ausgebildet ist. Die Abdeckungsplatte ist bei dieser Ausführungsform gleichzeitig mit der Schwinge montierbar. Die Abdeckungsplatte weist durch die einteilige Verbindung eine sehr hohe Stabilität gegenüber Verschiebekräften auf.

Weitere vorteilhafte Ausführungsformen sind dadurch gekennzeichnet, dass die Abdeckungsplatte eine seitliche Aussparung aufweist, die so bemessen ist, dass das Kreismesser in der Warteposition maximal soweit in die Aussparung ragen kann, dass es die Messer-abgewandte Seite der Abdeckungsplatte gerade nicht erreicht. Es kann weiter Bauraum eingespart werden, indem das Kreismesser in Richtung des Führungsspaltes bis auf die Höhe der Abdeckungsplatte ragt.

Eine weitere bevorzugte Ausführungsform der erfindungsgemäßen Brotschneidemaschine zeichnet sich dadurch aus, dass die Abdeckungsplatte eine Fase aufweist. Hierdurch kann ebenfalls Bauraum eingespart werden, wobei eine Fase vergleichsweise einfach herzustellen ist.

Die Brotschneidemaschine kann die Abdeckungsplatte eine Dicke zwischen 2 mm und 10mm, vorzugsweise 3mm, und/oder die Schwinge eine Dicke zwischen 3mm und 10mm, vorzugsweise 6 mm, aufweisen. Die Schwinge dient als Teil der Auflage für Schneidgut, wenn das Kreismesser in der Warteposition ist, und weist typischerweise aus Gründen der Stabilität eine größere Dicke auf als die Abdeckungsplatte. Die Breite der Schwinge und/oder der Abdeckungsplatte wird unter anderem vom Verfahrweg der Schwinge und/oder der Abdeckungsplatte und von der Breite und Lage des Ausfahrspaltes bestimmt. Insbesondere beträgt die Breite der Schwinge 81 mm bis 85mm, bevorzugt 83mm. Bevorzugt ist die Abdeckungsplatte so breit wie die Schwinge.

Ganz besonders bevorzugt sind Ausführungsformen der erfindungsgemäßen Brotschneidemaschine, bei welchen die Abdeckungsplatte und/oder die Schwinge aus Kunststoff ausgebildet sind, vorzugsweise aus demselben Kunststoff. Durch Kunststoff lassen sich die Abdeckungsplatte und die Schwinge bei vergleichsweise geringem Gewicht stabil ausgestalten. Alternativ können die Schwinge und/oder die Abdeckungsplatte als Blechteil ausgestaltet sein. Die Abdeckungsplatte und/oder die Schwinge können als Gitter ausgeformt sein.

Bei einer weiteren Ausführungsform der Brotschneidemaschine weist die Schwinge durchgängige Ausnehmungen auf, die vorzugsweise in dem Bereich der Schwinge angeordnet sind, mit welchem die Schwinge im Schneidebetrieb unterhalb des Schneidguts gelagert ist. Beim Schneidvorgang stützt die Schwinge das Brot. Durch die Ausnehmungen können beim Schneiden entstandene Krümel oder Brotkrumen hindurchfallen. Die Brotkrumen werden zur Entsorgung insbesondere in einer Krumen-Schublade aufgefangen. Die Ausnehmungen bewirken eine Gewichtsreduzierung und Reduzierung der Trägheit der Schwinge.

Die Abdeckungsplatte kann mehrteilig ausgebildet sein. Dann ist es möglich, nur einzelne Teile der Abdeckungsplatte zu verschieben oder zu verschwenken oder einzelne Teile der Abdeckungsplatte in unterschiedlichem Maß zu verschieben oder zu verschwenken.

Mit anderen Worten gibt es bei der erfindungsgemäßen Brotschneidemaschine insbesondere eine mit dem Messerarm zwangsgekoppelte Schwinge. Diese Schwinge ist bevorzugt aus Kunststoff ausgebildet und verschwindet zur Seite unter ein Schachtblech, auf dem insbesondere das Brot beim Schneidevorgang aufliegt, wenn der Messerarm nach vorne fährt. Die Schwinge hat vor allem zwei Funktionen. Zuerst dient sie als Unterlage für das geschnittene Brot und zweitens dient sie als Abdeckung bzw. Hindernis zu den beweglichen Bauteilen unter dem Schachtblech. Im Stand der Technik bleibt aber der Messerschlitz bzw. Ausfahrspalt offen. Somit kann der Bediener der Brotschneidemaschine beim Einlegen und Rausnehmen des Brotes absichtlich oder unabslichtlich durch den Messerschlitz zum stehenden Messer bzw. Kreismesser greifen. Um die Sicherheit zu erhöhen wird an die Schwinge eine vertikale Platte bzw. Abdeckungsplatte angebracht z.B. durch Verschrauben, Kleben, Schweißen. Die vertikale Platte öffnet und schließt den Messerschlitz synchron mit der Schwinge. Somit ist der Messerschlitz, wenn das Messer sich in der Parkposition bzw. Warteposition befindet, entweder teilweise (sodass nur noch ein ungefährlicher Schlitz bleibt) oder ganz abgedeckt. Folglich ist auch der Gefahrenbereich abgedeckt.

Eine alternative Möglichkeit, den Schutz vor dem Kreismesser in der Warteposition zu erhöhen, besteht darin, dass das Kreismesser in der Warteposition, insbesondere in Ausfahrrichtung, weiter vom Ausfahrspalt bzw. Messerschlitz entfernt ist als bei aus dem Stand der Technik bekannten Brotschneidemaschinen. Dann ist es schwerer möglich, in den Schlitz zu greifen und das Messer zu berühren. Allerdings muss die Brotschneidemaschine vergleichsweise breit ausgestaltet sein, damit das Kreismesser weiter zurückfahren kann.

Als eine weitere Möglichkeit zum erhöhten Schutz vor dem Kreismesser kann eine seitliche Platte in der Ruheposition bzw. Warteposition von der Seite gegen das Kreismesser gedrückt werden oder das Kreismesser gegen eine seitliche Platte gedrückt werden. Beim Berühren des Kreismessers von vorne in Richtung der Schneide des Kreismessers kann die seitliche Platte die Finger des Benutzers aufhalten. Allerdings ist dieser Schutzmechanismus vergleichsweise komplex ausgestaltet.

Außerdem könnte das Kreismesser seitlich vom Ausfahrspalt wegfahren und kann dann nicht mehr berührt werden. Allerdings ist auch dieser Schutzmechanismus vergleichsweise komplex ausgestaltet.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert.
Es zeigen:
- Fig. 1: eine isometrische Ansicht der erfindungsgemäßen Brotschneidemaschine mit einer Haube;
- Fig. 2a: eine Draufsicht auf einen Schnitt durch die erfindungsgemäße Brotschneidemaschine mit einem Kreismesser der Brotschneidemaschine in einer Warteposition;
- Fig. 2b: eine isometrische Ansicht der erfindungsgemäßen Brotschneidemaschine ohne die Haube mit dem Kreismesser in der Warteposition;
- Fig. 3a: eine Draufsicht auf einen Schnitt durch die erfindungsgemäße Brotschneidemaschine mit dem Kreismesser in einer mittleren Position;
- Fig. 3b: eine isometrische Ansicht der erfindungsgemäßen Brotschneidemaschine mit dem Kreismesser in der mittleren Position;
- Fig. 4a: eine Draufsicht auf einen Schnitt durch die erfindungsgemäße Brotschneidemaschine mit dem Kreismesser in einer maximal ausgefahrenen Position;
- Fig. 4b: eine isometrische Ansicht der erfindungsgemäßen Brotschneidemaschine mit dem Kreismesser in der maximal ausgefahrenen Position;
- Fig. 5a: eine erste isometrische Detailansicht des Kreismessers in der Warteposition sowie einer Schwinge und einer Abdeckungsplatte;
- Fig. 5b: eine zweite isometrische Detailansicht des Kreismessers in der Warteposition sowie der Schwinge und der Abdeckungsplatte, wobei die zweite isometrische Detailansicht im Vergleich zu der ersten isometrischen Detailansicht um 180° gedreht ist;
- Fig. 6a: eine erste isometrische Detailansicht des Kreismessers in der mittleren Position sowie der Schwinge und der Abdeckungsplatte;
- Fig. 6b: eine zweite isometrische Detailansicht des Kreismessers in der mittleren Position sowie der Schwinge und der Abdeckungsplatte, wobei die zweite isometrische Detailansicht im Vergleich zu der ersten isometrischen Detailansicht um 180° gedreht ist;
- Fig. 6c: eine Ansicht des Kreismessers in der mittleren Position sowie der Schwinge und der Abdeckungsplatte von unten.

Die vorliegende Erfindung befasst sich mit einer Brotschneidemaschine zum Abschneiden von Scheiben aus Schneidgut, insbesondere Brot, mit einem Schutz eines Benutzers vor dem in der Warteposition im Maschinengehäuse befindlichen Kreismesser.

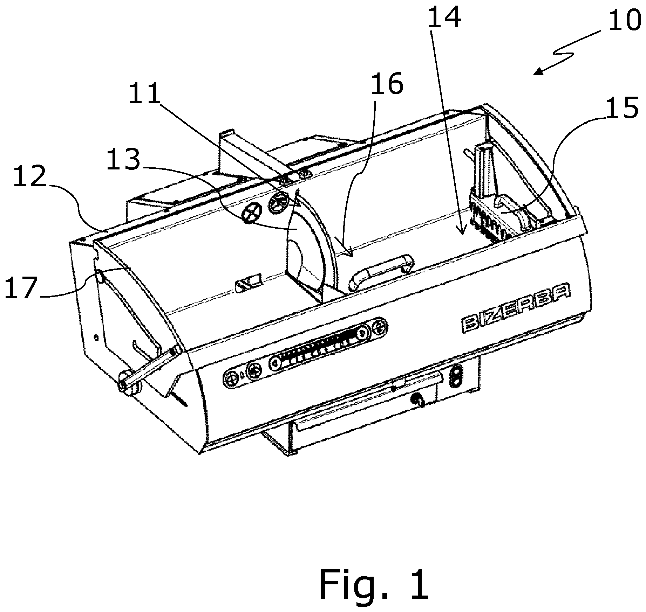

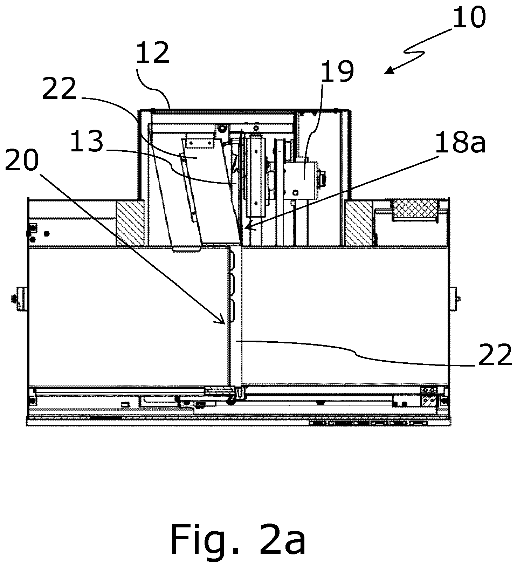

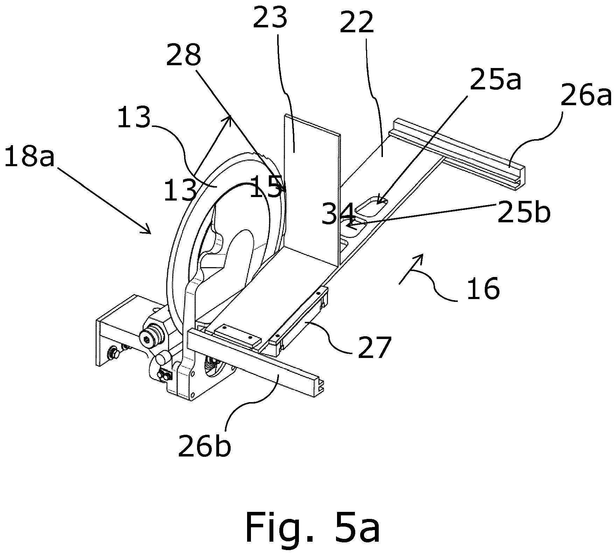

Die Figur 1 zeigt eine isometrische Ansicht der erfindungsgemäßen Brotschneidemaschine. Die Figuren 2a bis 4b zeigen die Brotschneidemaschine mit dem Kreismesser in verschiedenen Positionen in Draufsichten und isometrischen Ansichten. Die Figuren 5a bis 6c zeigen das Kreismesser sowie eine Schwinge mit einer Abdeckungsplatte in verschiedenen Positionen in einer Detailansicht.

Die in **Fig. 1** gezeigte Brotschneidemaschine **10** umfasst eine Schneideeinrichtung **11** in einem Maschinengehäuse **12.** Die Schneideeinrichtung 11 weist ein rotierbar gelagertes Kreismesser **13** auf. Das Kreismesser 13 ist aus dem Maschinengehäuse 12 in einen Schneideraum **14** der Brotschneidemaschine 10 verfahrbar. Der Schneideraum 14 dient der Aufnahme von Brot (nicht gezeigt), das durch das Kreismesser 13 geschnitten wird. Dabei wird das Brot zwischen einen Schieber **15** und das Kreismesser 13 in den Schneideraum 14 eingelegt und durch den Schieber 15 senkrecht zur Bewegungsrichtung bzw. Ausfahrrichtung **16** des Kreismessers 13 verschoben. Durch eine geradlinige Hin- und Her-Bewegung des rotierenden Kreismessers 13 wird das Brot in Scheiben geschnitten. Die Brotschneidemaschine 10 hat ferner eine Haube **17**, die das Kreismesser 13 abdeckt, wenn es sich im Schneideraum 14 befindet.

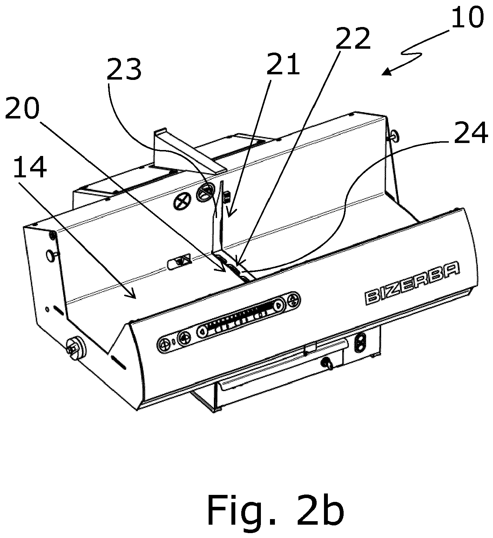

Das Kreismesser 13 ist vor Inbetriebnahme in einer Warteposition **18a** im Maschinengehäuse 12 gelagert, wie in **Fig. 2a** gezeigt. Ein vom Maschinengehäuse 12 umschlossener Motor **19** dient dem Antrieb des Kreismessers 13. Der Schneideraum 14 weist einen Führungsspalt **20** auf, in dem das Kreismesser 13 geführt ist. In dem Maschinengehäuse 12 ist, wie in **Fig. 2b** dargestellt, ein Ausfahrspalt **21** ausgeformt, durch den das Kreismesser 13 aus der Warteposition 18a im Maschinengehäuse 12 in den Schneideraum 14 hinein verfahrbar ist. Der Führungsspalt 20 ist durch eine Schwinge **22** abgedeckt. Die Schwinge 22 schützt den Benutzer vor einem unbeabsichtigten Hineingreifen in den Führungsspalt 20. Außerdem dient die Schwinge 22 als Teil der Auflage für das Brot vor oder nach dem Schneidvorgang. Die erfindungsgemäße Brotschneidmaschine 10 unterscheidet sich von aus dem Stand der Technik bekannten Brotschneidemaschinen vor allem dadurch, dass der Ausfahrspalt 21 durch eine Abdeckungsplatte **23** abgedeckt ist. Die Abdeckungsplatte 23 ist an der Schwinge 22 auf deren Schneidgut-seitiger Oberfläche **24** starr befestigt und ragt im Wesentlichen vertikal von der Schwinge 22 weg.

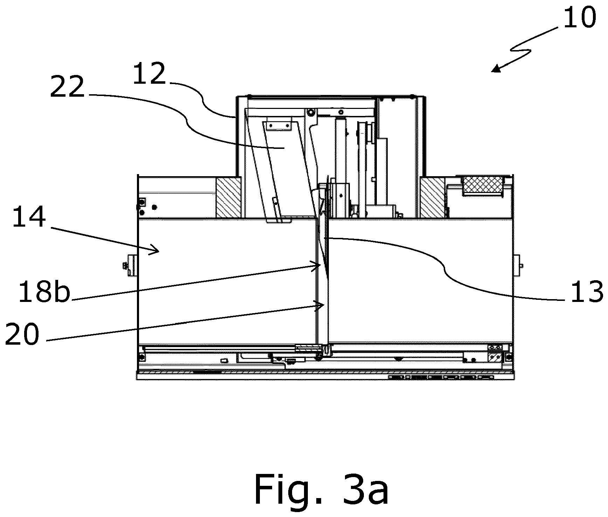

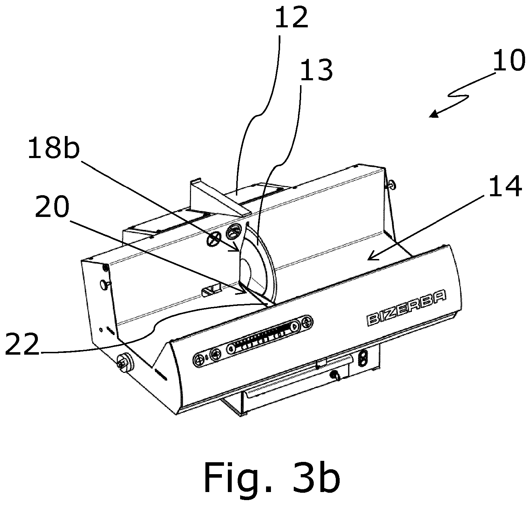

Wenn das Kreismesser 13 in einer mittigen Position **18b** angeordnet ist, in der es sich teilweise im Maschinengehäuse 12 und teilweise in dem Führungsspalt 20 im Schneideraum 14 befindet, so ist die Schwinge 22 zur Seite verschoben, wie in **Fig. 3a** zu erkennen. Sie befindet sich teilweise unterhalb des Schneideraums 14 und deckt teilweise den Führungsspalt 20 in dem Bereich ab, in dem sich das Kreismesser 13 nicht befindet, wie in **Fig. 3b** dargestellt.

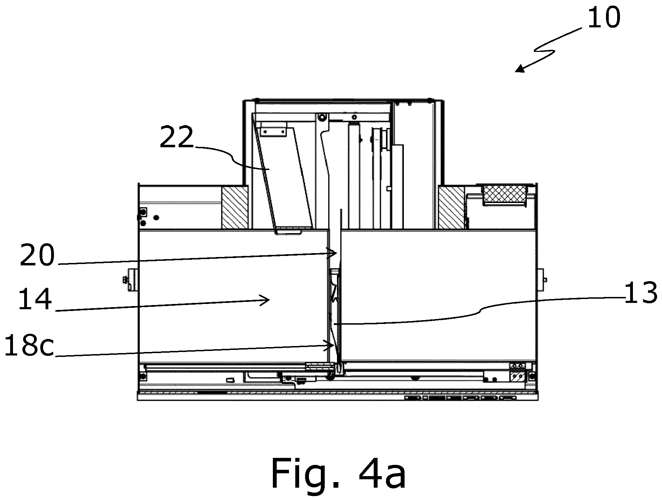

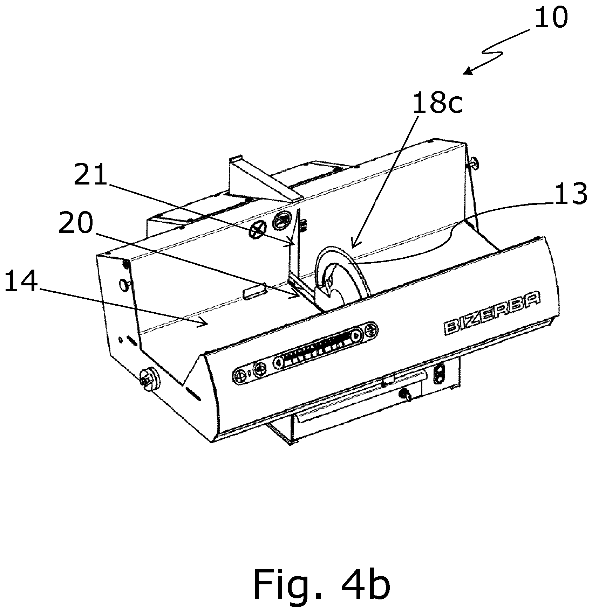

Wenn das Kreismesser 13 in einer maximal ausgefahrenen Position **18c** angeordnet ist, in der er es sich vollständig in dem Führungsspalt 20 im Schneideraum 14 befindet und den maximalen Abstand von dem Ausfahrspalt 21 hat, so ist die Schwinge 22 maximal zur Seite verschoben, wie in **Fig. 4a** zu erkennen. Sie deckt den Führungsspalt 20 nicht mehr ab, wie in **Fig. 4b** gezeigt. Der Führungsspalt 20 steht offen. Auch der Ausfahrspalt 21 wird nicht von der Abdeckungsplatte 23 überdeckt und steht vollständig offen.

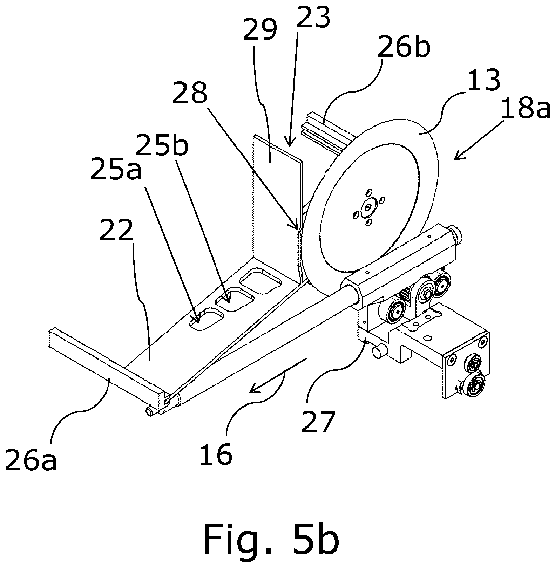

Die Schwinge 22 weist in **Fig. 5a** gezeigte Ausnehmungen **25a, 25b** auf, durch die beim Schneiden entstandene Brotkrümel bzw. Brotkrumen fallen. Sie wird an zwei senkrecht zur Ausfahrrichtung 16 des Kreismessers 13 verlaufenden Schienen **26a, 26b** geführt, die fest mit dem Maschinengehäuse 10 verbunden sind. Ein Schlitten **27** bewegt sich synchron mit dem Kreismesser 13 und verschiebt die Schwinge 22 seitwärts, wenn das Kreismesser 13 in den Führungsspalt 20 ausgefahren wird. Die Abdeckungsplatte 23 hat eine seitliche Aussparung **28.** Das Kreismesser 13 ragt in der Warteposition 18a in diese Ausnehmung 28 hinein, sodass sich das Kreismesser 13 in der Ausfahrrichtung 16 des Kreismessers 13 auf der Höhe der Abdeckungsplatte 23 befindet. Das Kreismesser 13 erreicht aber die dem Kreismesser 13 abgewandte Seite **29** der Abdeckungsplatte 23 gerade nicht, wie in **Fig. 5b** zu erkennen.

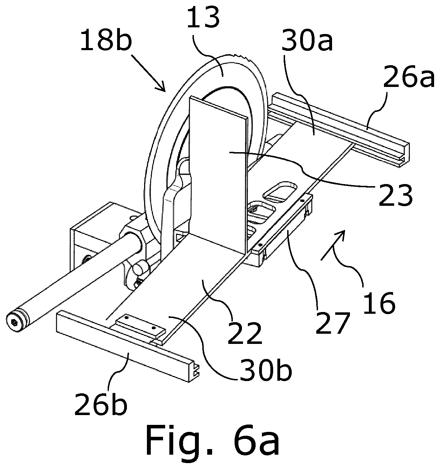

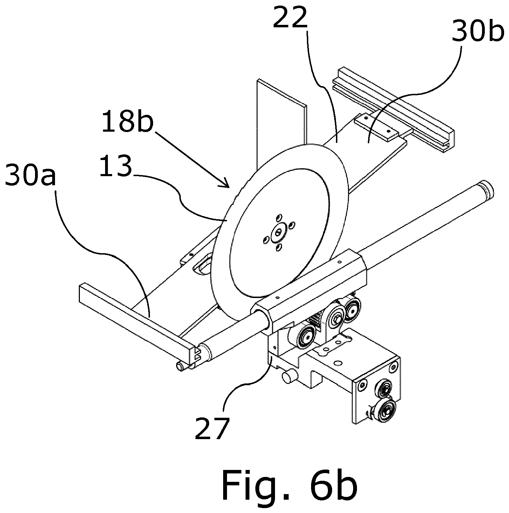

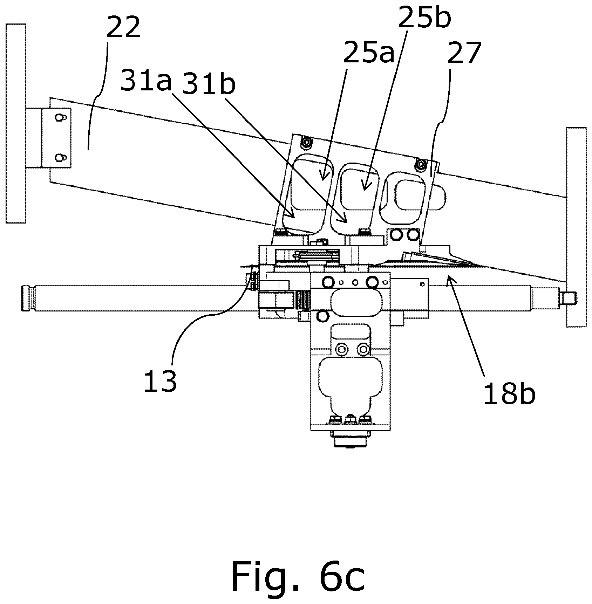

Bei einer mittigen Anordnung 18b des Kreismessers 13 ist die Schwinge 22 mit der starr verbundenen Abdeckungsplatte 23 seitlich verschoben, derart, dass die Enden **30a, 30b** der Schwinge 22 mittig in den Schienen 26a, 26b positioniert sind, wie die **Fign. 6a** und **6b** zeigen. Der Schlitten 27, der die Schwinge 22 seitlich verschiebt, weist ebenfalls Öffnungen **31a, 31b** auf, die mit den Ausnehmungen 25a 25b der Schwinge 22 zumindest teilweise überlappen, sodass Brotkrumen hindurchfallen können, wie in **Fig. 6c** dargestellt. Das Kreismesser 13 befindet sich in Ausfahrrichtung 16 größtenteils jenseits der Abdeckungsplatte 23 in dem Schneideraum 14, vergleiche Fig. 3a.

### Bezugszeichenliste:

- 10: Brotschneidemaschine
- 11: Schneideeinrichtung
- 12: Maschinengehäuse
- 13: Kreismesser
- 14: Schneideraum
- 15: Schieber
- 16: Bewegungsrichtung des Kreismessers
- 17: Haube
- 18a: Warteposition des Kreismessers
- 18b: mittige Position des Kreismessers
- 18c: maximal ausgefahrene Position des Kreismessers
- 19: Motor
- 20: Führungsspalt
- 21: Ausfahrspalt
- 22: Schwinge
- 23: Abdeckungsplatte
- 24: Schneidgut-seitige Oberfläche
- 25a,b: Ausnehmungen der Schwinge
- 26a,b: Schienen
- 27: Schlitten
- 28: seitliche Aussparung der Abdeckungsplatte
- 29: abgewandte Seite der Abdeckungsplatte
- 30a,b: Enden der Schwinge
- 31a,b: Öffnungen des Schlittens

### Referenzliste

Für die Beurteilung der Patentfähigkeit in Betracht gezogene Publikation:
[1] EP 2 667 080 A2

## Patentansprüche

1. Brotschneidemaschine (10) zum Abschneiden von Scheiben aus Schneidgut, insbesondere Brot, mit einer Schneideeinrichtung (11), die ein Kreismesser (13) umfasst, das in einer Warteposition (18a) in einem Maschinengehäuse (12) gelagert und durch einen vom Maschinengehäuse (12) umschlossenen Motor (19) angetrieben ist, wobei das Kreismesser (13) an einem Messerarm rotierbar befestigt ist, wobei am oder im Maschinengehäuse (12) ein Schneideraum (14) für das Schneidgut ausgebildet ist, wobei der Schneideraum (14) einen Führungsspalt (20) aufweist, wobei durch Bewegen des Führungsarms das Kreismesser (13) in dem Führungsspalt (20) durch einen Ausfahrspalt (21) des Maschinengehäuses (12) aus der Warteposition (18a) in den Schneideraum (14) hinein verfahrbar ist, wobei am Maschinengehäuse (12) eine Haube (17) zum Abdecken des rotierenden Kreismessers (13) im Betrieb angeordnet ist, wobei die Haube (17) einen Verriegelungsmechanismus aufweist, durch den die Haube (17) stets verriegelt ist, wenn sich das Kreismesser (13) im Schneideraum (14) und/oder Betriebszustand befindet, wobei der Führungsspalt (20) durch eine senkrecht zur Bewegungsrichtung (16) des Kreismessers (13) verschiebbare Schwinge (22) abdeckbar ist, wenn sich das Kreismesser (13) in der Warteposition (18a) befindet, wobei die Schwinge (22) gleichzeitig mit dem Ausfahren des Kreismessers (13) aus der Warteposition (18a) vom Führungsspalt (20) weg verschiebbar ist, wodurch der Führungsspalt (20) geöffnet wird,
**dadurch gekennzeichnet,**
**dass** auf einer Schneidgut-seitigen Oberfläche (24) der Schwinge (22) eine Abdeckungsplatte (23) starr befestigt ist, die im Wesentlichen vertikal von der Schwinge (22) weg ragt und den Ausfahrspalt (21) immer dann abdeckt, wenn sich das Kreismesser (13) in der Warteposition (18a) befindet, wobei die Abdeckungsplatte (23) durch eine Zwangsführung gleichzeitig mit der Bewegung der Schwinge (22) von dem Ausfahrspalt (21) weg bewegbar ist, wodurch der Ausfahrspalt (21) geöffnet wird.

2. Brotschneidemechanismus nach Anspruch 1, **dadurch gekennzeichnet, dass** die Abdeckungsplatte (23) gemeinsam mit der Schwinge (22), insbesondere linear, verschiebbar ist, oder dass ein Schwenkmechanismus vorhanden ist, der die Abdeckungsplatte (23) auf schwenkt, wenn die Schwinge (22) verschoben wird.

3. Brotschneidemaschine nach einem der vorhergehenden Ansprüche, **dadurch gekennzeichnet, dass** der Verriegelungsmechanismus so ausgestaltet ist, dass die Haube (17) stets verriegelt ist, wenn sich das Kreismesser (13) im Schneideraum (14) befindet.

4. Brotschneidemaschine nach Anspruch 3, **dadurch gekennzeichnet, dass** der Verriegelungsmechanismus so ausgestaltet ist, dass das Kreismesser (13) nur dann in den Schneideraum (14) verfahrbar ist, wenn die Haube (17) verriegelt ist.

5. Brotschneidmaschine nach einem der Ansprüche 1 bis 4, **dadurch gekennzeichnet, dass** im montierten Zustand der Abdeckungsplatte (23) eine Zapfenverbindung zur Schwinge (22) vorhanden ist.

6. Brotschneidmaschine nach einem der vorhergehenden Ansprüche, **dadurch gekennzeichnet, dass** die Abdeckungsplatte (23) und die Schwinge (22) eine Klebstoffverbindung oder eine Schweißverbindung aufweisen.

7. Brotschneidmaschine nach einem der vorhergehenden Ansprüche, **dadurch gekennzeichnet, dass** die Schwinge (22) eine Ausnehmung, insbesondere eine Nut, aufweist, in die die Abdeckungsplatte (23) im montierten Zustand eingeschoben ist.

8. Brotschneidemaschine nach einem der vorhergehenden Ansprüche, **dadurch gekennzeichnet, dass** die Abdeckungsplatte (23) einen Fuß zur stabilen Abstützung der Abdeckungsplatte (23) auf der Schwinge (22) aufweist, der vorzugsweise auch Öffnungen zur Aufnahme von Schrauben und/oder Stiften enthält.

9. Brotschneidemaschine nach einem der vorhergehenden Ansprüche, **dadurch gekennzeichnet, dass** die Abdeckungsplatte (23) und die Schwinge (22) durch Stifte und/oder Schrauben, vorzugsweise durch einen oder mehrere Winkelverbinder, miteinander verbunden sind.

10. Brotschneidemaschine nach einem der Ansprüche 1 bis 4, **dadurch gekennzeichnet, dass** die Abdeckungsplatte (23) mit der Schwinge (22) einteilig ausgebildet ist.

11. Brotschneidemaschine nach einem der Ansprüche 1 bis 10, **dadurch gekennzeichnet, dass** die Abdeckungsplatte (22) eine seitliche Aussparung (28) aufweist, die so bemessen ist, dass das Kreismesser (13) in der Warteposition (18a) maximal soweit in die Aussparung (28) ragen kann, dass es die Messer-abgewandte Seite (29) der Abdeckungsplatte (23) gerade nicht erreicht.

12. Brotschneidemaschine nach einem der Ansprüche 1 bis 10, **dadurch gekennzeichnet, dass** die Abdeckungsplatte (23) eine Fase aufweist.

13. Brotschneidemaschine nach einem der vorhergehenden Ansprüche, **dadurch gekennzeichnet, dass** die Abdeckungsplatte (23) eine Dicke zwischen 2mm und 10mm, vorzugsweise 3mm, und die Schwinge eine Dicke zwischen 3mm und 10mm, vorzugsweise 6mm, aufweisen.

14. Brotschneidemaschine nach einem der vorhergehenden Ansprüche, **dadurch gekennzeichnet, dass** die Abdeckungsplatte (23) und/oder die Schwinge (22) aus Kunststoff ausgebildet sind, vorzugsweise aus demselben Kunststoff.

15. Brotschneidemaschine nach einem der vorhergehenden Ansprüche, **dadurch gekennzeichnet, dass** die Schwinge (22) durchgängige Ausnehmungen (25a, 25b) aufweist, die vorzugsweise in dem Bereich der Schwinge (22) angeordnet sind, mit welchem die Schwinge (22) im Schneidebetrieb unterhalb des Schneidguts gelagert ist.

## Claims

1. Bread slicing machine (10) for cutting slices from cutting material, in particular bread, comprising a cutting device (11) having a circular knife (13) which is mounted in a machine housing (12) in a waiting position (18a) and is driven by a motor (19) enclosed by the machine housing (12), the circular knife (13) being rotatably attached to a knife arm, a cutting space (14) for the cutting material being formed on or in the machine housing (12), the cutting space (14) having a guide gap (20), the circular knife (13) in the guide gap (20) being movable through an extension gap (21) of the machine housing (12) from the waiting position (18a) into the cutting space (14) by moving the guide arm, a hood (17) for covering the rotating circular knife (13) during operation being arranged on the machine housing (12), the hood (17) having a locking mechanism by means of which the hood (17) is always locked when the circular knife (13) is in the cutting space (14) and/or in the operating state, the guide gap (20) being able to be covered by a rocker (22) that can be moved perpendicularly to the direction of movement (16) of the circular knife (13) when the circular knife (13) is in the waiting position (18a), the rocker arm (22) being displaceable away from the guide gap (20) simultaneously with the extension of the circular knife (13) from the waiting position (18a), as a result of which the guide gap (20) is opened,
**characterized in that**
a cover plate (23) is rigidly fastened on a cutting-material-side surface (24) of the rocker (22), which cover plate protrudes substantially vertically away from the rocker (22) and always covers the extension gap (21) when the circular knife (13) is in the waiting position (18a), the cover plate (23) being movable away from the extension gap (21) with forced guidance simultaneously with the movement of the rocker arm (22), as a result of which the extension gap (21) is opened.

2. Bread cutting mechanism according to claim 1, **characterized in that** the cover plate (23) is displaceable together with the rocker (22), in particular linearly, or **in that** there is a pivoting mechanism which pivots the cover plate (23) open when the rocker (22) is displaced.

3. Bread cutting machine according to either of the preceding claims, **characterized in that** the locking mechanism is designed such that the hood (17) is always locked when the circular knife (13) is in the cutting space (14).

4. Bread cutting machine according to claim 3, **characterized in that** the locking mechanism is designed such that the circular knife (13) can be moved into the cutting space (14) only when the hood (17) is locked.

5. Bread cutting machine according to any of claims 1 to 4, **characterized in that** in the assembled state of the cover plate (23) there is a pin connection to the rocker (22).

6. Bread cutting machine according to any of the preceding claims, **characterized in that** the cover plate (23) and the rocker (22) have an adhesive connection or a welded connection.

7. Bread cutting machine according to any of the preceding claims, **characterized in that** the rocker (22) has a recess, in particular a groove, into which the cover plate (23) is inserted in the assembled state.

8. Bread cutting machine according to any of the preceding claims, **characterized in that** the cover plate (23) has a foot for stable support of the cover plate (23) on the rocker (22), which foot preferably also contains openings for receiving screws and/or pins.

9. Bread cutting machine according to any of the preceding claims, **characterized in that** the cover plate (23) and the rocker (22) are connected to one another by pins and/or screws, preferably by one or more angle connectors.

10. Bread cutting machine according to any of claims 1 to 4, **characterized in that** the cover plate (23) is formed in one piece with the rocker (22).

11. Bread cutting machine according to any of claims 1 to 10, **characterized in that** the cover plate (22) has a lateral recess (28) which is dimensioned such that, in the waiting position (18a), the circular knife (13) can protrude into the recess (28) at most to such an extent that it does not quite reach the side (29) of the cover plate (23) facing away from the knife.

12. Bread cutting machine according to any of claims 1 to 10, **characterized in that** the cover plate (23) has a bevel.

13. Bread cutting machine according to any of the preceding claims, **characterized in that** the cover plate (23) has a thickness between 2 mm and 10 mm, preferably 3 mm, and the rocker has a thickness between 3 mm and 10 mm, preferably 6 mm.

14. Bread cutting machine according to any of the preceding claims, **characterized in that** the cover plate (23) and/or the rocker (22) are made from plastics material, preferably from the same plastics material.

15. Bread cutting machine according to any of the preceding claims, **characterized in that** the rocker (22) has continuous recesses (25a, 25b) which are preferably arranged in the region of the rocker (22) and by means of which the rocker (22) is received below the cutting material in cutting operation.

## Revendications

1. Machine à couper le pain (10) permettant de couper des tranches d'aliments à couper, en particulier du pain, comportant un dispositif de coupe (11) qui comprend un couteau circulaire (13), lequel est stocké dans un boîtier de machine (12) dans une position d'attente (18a) et est entraîné par un moteur (19) entouré par le boîtier de machine (12), le couteau circulaire (13) étant fixé rotatif à un bras de couteau, un espace de coupe (14) destiné aux aliments à couper étant réalisé sur ou dans le boîtier de machine (12), l'espace de coupe (14) présentant une fente de guidage (20), le couteau circulaire (13) se trouvant dans la fente de guidage (20) pouvant être déplacé, par une fente de déploiement (21) du boîtier de machine (12), depuis la position d'attente (18a) jusque dans l'espace de coupe (14) par un mouvement du bras de guidage, un capot (17) permettant de recouvrir le couteau circulaire (13) rotatif étant disposé sur le boîtier de machine (12) pendant le fonctionnement, le capot (17) présentant un mécanisme de verrouillage par lequel le capot (17) est toujours verrouillé lorsque le couteau circulaire (13) se trouve dans l'espace de coupe (14) et/ou en état de fonctionnement, la fente de guidage (20) pouvant être recouverte par une bascule (22) pouvant coulisser perpendiculairement à la direction de mouvement (16) du couteau circulaire (13) lorsque le couteau circulaire (13) se trouve en position d'attente (18a), la bascule (22) pouvant coulisser hors de la position d'attente (18a), en s'éloignant de la fente de guidage (20), en même temps que le déploiement du couteau circulaire (13), moyennant quoi la fente de guidage (20) est ouverte,
**caractérisée en ce**
**qu'**une plaque de recouvrement (23) est fixée de manière rigide sur une surface (24) de la bascule (22) côté aliments à couper, laquelle plaque de recouvrement fait sensiblement saillie verticalement depuis la bascule (22) et couvre toujours la fente de déploiement (21) lorsque le couteau circulaire (13) se trouve en position d'attente (18a), la plaque de recouvrement (23) pouvant être éloignée de la fente de déploiement (21), en même temps que le mouvement de la bascule (22), au moyen d'un guidage forcé, moyennant quoi la fente de déploiement (21) est ouverte.

2. Mécanisme de coupe de pain selon la revendication 1, **caractérisé en ce que** la plaque de recouvrement (23) peut coulisser conjointement avec la bascule (22), en particulier linéairement, ou **en ce qu'**un mécanisme de pivotement est présent, lequel fait pivoter la plaque de recouvrement (23) pour l'ouvrir lorsque la bascule (22) est fait coulisser.

3. Machine à couper le pain selon l'une des revendications précédentes, **caractérisée en ce que** le mécanisme de verrouillage est conçu de façon à ce que le capot (17) est toujours verrouillé lorsque le couteau circulaire (13) se trouve dans l'espace de coupe (14).

4. Machine à couper le pain selon la revendication 3, **caractérisée en ce que** le mécanisme de verrouillage est conçu de façon à ce que le couteau circulaire (13) ne peut être déplacé dans l'espace de coupe (14) que lorsque le capot (17) est verrouillé.

5. Machine à couper le pain selon l'une des revendications 1 à 4, **caractérisée en ce qu'**à l'état monté de la plaque de recouvrement (23), il existe une liaison tenon avec la bascule (22).

6. Machine à couper le pain selon l'une des revendications précédentes, **caractérisée en ce que** la plaque de recouvrement (23) et la bascule (22) présentent une liaison adhésive ou une liaison soudée.

7. Machine à couper le pain selon l'une des revendications précédentes, **caractérisée en ce que** la bascule (22) présente un évidement, en particulier une rainure, dans lequel la plaque de recouvrement (23) est insérée à l'état monté.

8. Machine à couper le pain selon l'une des revendications précédentes, **caractérisée en ce que** la plaque de recouvrement (23) présente un pied destiné au support stable de la plaque de recouvrement (23) sur la bascule (22), lequel pied contient de préférence également des ouvertures destinées à recevoir des vis et/ou des goupilles.

9. Machine à couper le pain selon l'une des revendications précédentes, **caractérisée en ce que** la plaque de recouvrement (23) et la bascule (22) sont reliées l'une à l'autre par des goupilles et/ou des vis, de préférence par une ou plusieurs liaisons d'angle.

10. Machine à couper le pain selon l'une des revendications 1 à 4, **caractérisée en ce que** la plaque de recouvrement (23) est réalisée d'une seule pièce avec la bascule (22).

11. Machine à couper le pain selon l'une des revendications 1 à 10, **caractérisée en ce que** la plaque de recouvrement (22) présente un évidement (28) latéral qui est dimensionné de telle sorte que le couteau circulaire (13) peut faire saillie dans l'évidement (28), en position d'attente (18a), au plus de façon à ne juste pas atteindre le côté (29) de la plaque de recouvrement (23) opposé au couteau.

12. Machine à couper le pain selon l'une des revendications 1 à 10, **caractérisée en ce que** la plaque de recouvrement (23) présente un biseau.

13. Machine à couper le pain selon l'une des revendications précédentes, **caractérisée en ce que** la plaque de recouvrement (23) présente une épaisseur comprise entre 2 mm et 10 mm, de préférence de 3 mm, et la bascule présente une épaisseur comprise entre 3 mm et 10 mm, de préférence de 6 mm.

14. Machine à couper le pain selon l'une des revendications précédentes, **caractérisée en ce que** la plaque de recouvrement (23) et/ou la bascule (22) sont constituées de matière plastique, de préférence de la même matière plastique.

15. Machine à couper le pain selon l'une des revendications précédentes, **caractérisée en ce que** la bascule (22) présente des évidements continus (25a, 25b) qui sont de préférence disposés dans la zone de la bascule (22) avec laquelle la bascule (22) est montée en-dessous des aliments à couper lors du fonctionnement de la coupe.
